# EUROPEAN PATENT APPLICATION

(11) **EP 2 600 260 A1**
(43) Date of publication of application: **05.06.2013**
(21) Application number: 12192663.8
(22) Date of filing: 14.11.2012
(51) Int. Cl.: G06F 17/30

(54) **Method and apparatus for processing digital content**

(30) Priority: 30.11.2011 EP 11306591
(71) Applicant: Thomson Licensing, 92130 Issy-les-Moulineaux (FR)
(72) Inventor: Koehler, Ralf, 30455 Hannover (DE); Kamphenkel, Oliver, 31275 Lehrte (DE)
(74) Representative: Schmidt-Uhlig, Thomas

(57) **Abstract**

A method and an apparatus (30) for processing digital content arranged in a container file comprising internal file management information (7, 8) are proposed, which allow to perform processing of the digital content with one or more processing nodes (2) with a reduced delay caused by a transmission of the digital content to the one or more processing nodes (2). After creating (10) placeholder files with the size of the digital content on storage systems (3) associated to the processing nodes (2), the internal file management information (7, 8) is transmitted (11) from a data repository (1) to the storage systems (3) and stored (12) at locations within the placeholder files specified by the container file format. Subsequently, content elements of the digital content are transmitted (13) from the data repository (1) to the storage systems (3) and stored (14) at their specific locations within the placeholder files. These stored content elements are then processed (18) with the one or more processing nodes (2).

## Description

The invention relates to a method and an apparatus for processing digital content, like digital image sequences. More specifically, a method and an apparatus for processing digital content are described, which allow to perform processing of the digital content with one or more processing nodes with a reduced delay caused by a transmission of the digital content to the one or more processing nodes.

Motion picture films, as a prominent example of digital content, are part of our cultural heritage. Unfortunately, they are often affected by undesirable objects such as scratches, dust, dirt, stains, abrasion and some more. Today a lot of effort is made to perform restoration of motion picture films. Usually, restoration is carried out digitally after scanning the motion picture films.

Apparently manual restoration of digitized films by finding and removing each scratch and dirt object is a time consuming business, although there is software on the market that assists artists in many aspects of the job. In particular, manual restoration of old content with large amounts of either scratch or dirt may not be financially viable. This is even more the case for large archives with footage of unknown commercial value.

The application of automatic restoration software with algorithms that try to detect and remove scratch and dirt is the only viable alternative to a manual process. At present there are a number of software and hardware products available on the market which perform detection and removal of scratch and dirt more or less automatically. Usually a manual adjustment of certain parameters is needed to fine tune detection and removal, sometimes individually for each scene. After processing, the restored output or parts thereof have to be either accepted or rejected, with the option of rerunning restoration with different parameters. This is unsatisfactory since the adjustment takes time and quality may be not good enough in critical scenes that have not been specially adapted. Detection of scratch and dirt is a nontrivial problem that is currently not totally solved. There is still a certain ratio of objects that will either not be detected or falsely detected.

Recently it has been proposed to split the restoration process of motion picture films into detection of objects, e.g. scratch and dirt objects, and removal using an automatic metadata driven workflow, and to further split the detection process and the removal process into a plurality of smaller processing tasks, which are allocated to a plurality of processing nodes.

Motion picture films are processed in either single frame file formats, such as DPX (SMPTE 268-2003) or TIFF (ISO 12639:2004), or in container stream based file formats, such as MXF (SMPTE 377M) or AVI (Video for Windows SDK, Microsoft) and MOV (QuickTime, Mac OSX SDK, Apple).

The single frame file formats are ideal for pipelining and multi-processing if the smallest work unit is a frame. The motion picture film can be split into frames and the frames can be transmitted to the processing nodes one by one. If enough frames have reached a processing node, the processing can start and continue by receiving new frames in parallel. This means that even if the number of frames of a motion picture film is very large, the processing can start immediately after receiving a few frames at the processing nodes.

In contrast, in order to process indexed files like AVI or MOV the whole motion picture film needs to be transmitted to the processing nodes because the index of the motion picture film is located at the end of the file. Therefore, the processing cannot start during transmission time and the processing is delayed for a significant amount of time depending on the bandwidth of the network to the processing nodes. The same problem arises with any digital content that is transmitted to multiple processing nodes as a large file with important management data like index tables.

It is thus an object of the present invention to propose a solution for processing digital content with one or more processing nodes, which does not require transmission of the complete digital content to the multiple processing nodes before processing can be started.

According to the invention, a method for processing digital content stored in a data repository using one or more processing nodes with associated storage systems, the digital content being arranged in a container file comprising internal file management information in accordance with a container file format, comprises the steps of:
- creating placeholder files with the size of the digital content on the storage systems;
- transmitting the internal file management information from the data repository to the storage systems;
- storing the transmitted internal file management information at locations within the placeholder files specified by the container file format;
- transmitting content elements of the digital content from the data repository to the storage systems;
- storing the transmitted content elements at their specific locations within the placeholder files; and
- processing the stored content elements with the one or more processing nodes.

In order to facilitate the above proposed method, an apparatus for processing digital content stored in a data repository using one or more processing nodes with associated storage systems, the digital content being arranged in a container file comprising internal file management information in accordance with a container file format, comprises:
- an input for receiving the internal file management information and content elements of the digital content from the data repository; and
- a writer engine for creating placeholder files with the size of the digital content on the storage systems, for storing the received internal file management information at locations within the placeholder files specified by the container file format, and for storing the received content elements at their specific locations within the placeholder files.

The solution according to the present invention proposes to create a container file on the storage systems of the processing nodes, e.g. an MXF file, an AVI file, or a MOV file, with the original file size but without valid data. Then the file transfer first writes the internal file management information, e.g. index tables and/or header information, at the specific file offsets specified by the container file format. Only then the content parts of the file are transmitted, e.g. frames of a digital image sequence. This creates a digital content file at the processing nodes, which looks like a valid file. In this way a processing node can read first content elements from the file after a short time. The solution enables the start of processing much earlier than known solutions, before the whole file is transmitted to the one or more processing nodes. Depending on the network bandwidth this can save several hours.

Advantageously, information about which content elements of the digital content are available at the storage systems is stored in a management file, a system memory, or other storage. For this purpose preferably a content tracker is provided. In this way it is ensured that the processing nodes do not attempt reading of invalid areas of the file.

Favorably, before initiating processing of the content elements it is checked whether all content elements of the digital content necessary for a specific processing task are available at the storage systems. This helps to prevent that processing of the digital content is interrupted because necessary data is missing. Such interruptions could otherwise lead to the need to process the digital content up to the interruption point once again, which could increase the processing time.

Advantageously, results of the processing of the content elements are provided to a further stage of a processing workflow. For example, the results of a dirt detection process for a movie are made available to a dirt removal process. This allows to start the removal process though the detection process has not yet been completed for the whole movie.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: shows a system for processing digital content,
- Fig. 2: illustrates frame based files,
- Fig. 3: depicts a container file with index tables,
- Fig. 4: schematically illustrates a workflow according to the invention for processing digital content,
- Fig. 5: shows an example of a frame table of a management file, and
- Fig. 6: shows an apparatus according to the invention for writing digital content to a storage system.

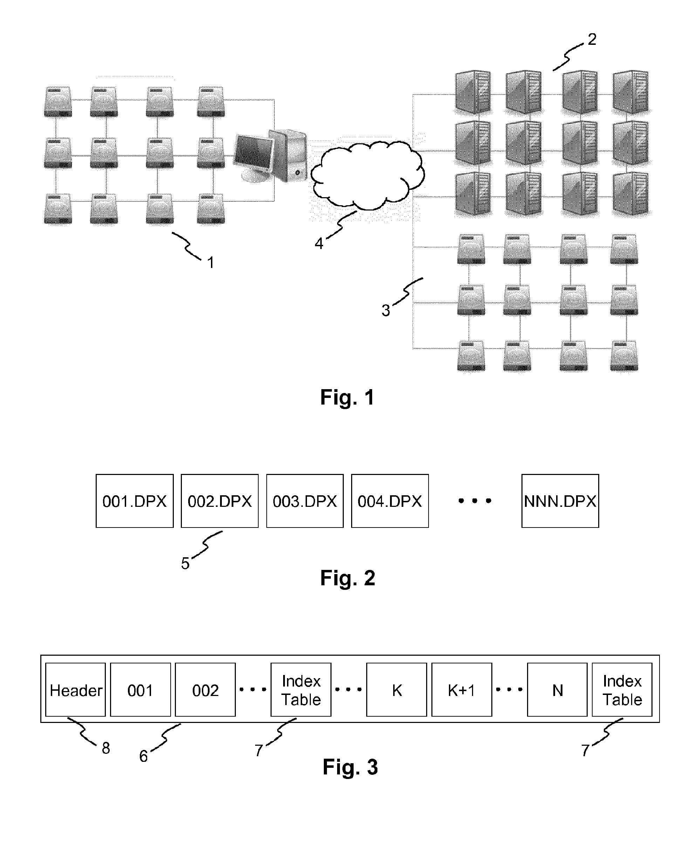

Fig. 1 shows an exemplary system for processing digital content, e.g. an image processing system. The system comprises a data repository 1, typically a slow but huge storage system, and a plurality of processing nodes 2 with their associated storage systems 3. The storage systems 3 typically use small but very fast storage system and holds at least the digital content that currently is to be processed. The processing nodes 2 and the data repository 1 are connected with a bus system 4, e.g. a PCI, PCIe, Ethernet, Infiniband, or FC bus system.

In order to process the digital content the required digital content first has to be transmitted and, if necessary, transcoded or transformed, from the data repository 1 to the storage systems 3. Depending on the interconnect 4 this can be a time consuming task with a significant duration in the order of magnitude of the processing time. To shorten the overall run-time a pipelined processing scheme is employed, which means that the processing does not await transmission of the whole digital content. Instead, the processing starts immediately after the minimum number of frames has been transmitted, i.e. all frames that are needed for the specific processing steps and in order to ensure full load of the CPU's of the processing nodes 2. Of course, the processing nodes 2 need information about the currently available frames to prevent processing of undefined data. This is easy to implement using frame based files like DPX, TIFF, PNG, as exemplarily illustrated in Fig. 2. The names of the files 5 contain the frame numbers. It is thus very easy to determine which frames are present and accessible.

However, the situation is different for container files 6 like AVI, MOV, MXF etc., as shown in Fig. 3. Such files 6 contain index tables 7, which are required for accessing the frames.

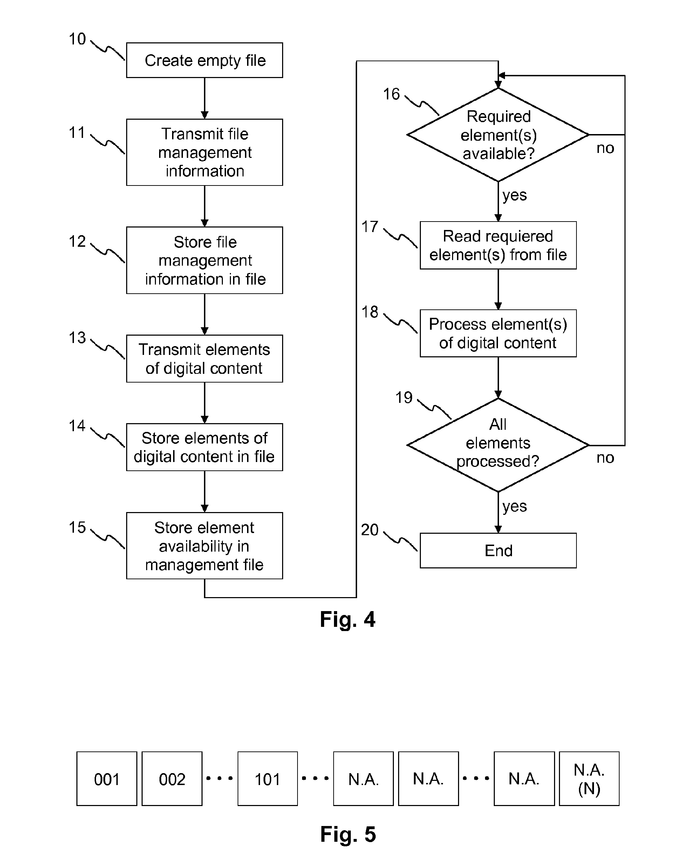

In order to allow processing of digital content that is transmitted as a container file, a workflow as illustrated in Fig. 4 is used. The workflow does not require a sequential transmission of the data of the container file. In a first step 10 a placeholder file with the size of the original container file is created in one or more of the storage systems 3. Then the regions of the container file 6 containing the internal file management information are transmitted 11 to the storage systems 3. The internal file management information includes, for example, header information 8 with links to index tables 7 and the index tables 7 themselves. The transmitted internal file management information is then stored 12 at the correct locations within the placeholder file. These areas of the file are written using seek and write operations of the underlying operating system or the underlying infrastructure. Once valid internal file management information has been written 12 the elements of the digital content, e.g. video frames, are transmitted 13 and stored 14 in the file at their specific positions. At the same time information about which elements of the content are already available is generated and stored 15 in a management file, system memory or other storage, e.g. as a table containing the numbers of the already arrived frames. The processing nodes 2 check 16 the management file to determine which of the required elements of the digital content are already available in order to be able to determine the current read limit and then read 17 the required data out of the container file 6 for processing 18 of the digital content. The processing ends 20 when it is been determined 19 that all necessary data has been written 14 to the container file and processed 18 by the processing nodes 2. After processing 18 the processing results are made available to further workflow steps, e.g. a review operation. The proposed workflow has the advantage that when only a part of the digital content is to be processed by a processing node 2, only the corresponding elements of the digital content need to be stored 14 in the container file 6 in addition to the internal file management information, which greatly reduces the amount of transmitted data.

Fig. 5 illustrates an example of a table tracking the already arrived frames of a movie. In this example for each of the N frames of the movie a table entry is reserved. The numbers of the arrived frames are recorded in the corresponding entries, whereas the not yet arrived frames are indicated as 'Not Available' (N.A.).

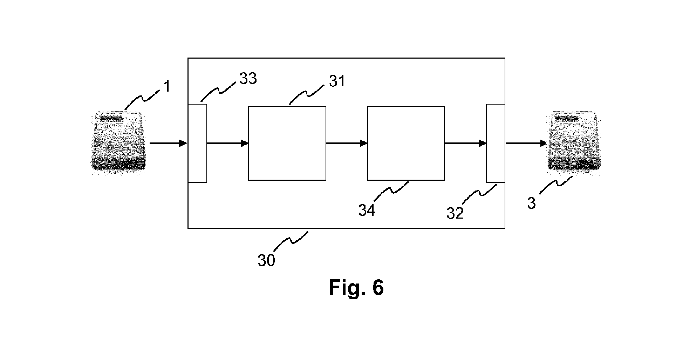

An apparatus 30 for writing digital content to a local or network storage system 3 is schematically depicted in Fig. 6. The apparatus 30 includes a writer engine 31 for creating a placeholder file on the storage system 3 via an interface 32 and for filling this placeholder file with internal file management information 7, 8 and elements of the digital content retrieved via an input 33 from the data repository 1. The writer engine 31 is located either on the sender side or on the receiver side of a system for processing digital content. If the writer engine works locally, sender side and receiver side are the same. If the writer engine 31 is located on the receiver side, it preferably also comprises a content tracker 34 for tracking which elements of the digital content are already available on the storage system 3.

## Claims

1. A method for processing digital content stored in a data repository (1) using one or more processing nodes (2) with associated storage systems (3), the digital content being arranged in a container file comprising internal file management information (7, 8) in accordance with a container file format, the method **comprising** the steps of:
- creating (10) placeholder files with the size of the digital content on the storage systems (3);
- transmitting (11) the internal file management information (7, 8) from the data repository (1) to the storage systems (3);
- storing (12) the transmitted internal file management information (7, 8) at locations within the placeholder files specified by the container file format;
- transmitting (13) content elements of the digital content from the data repository (1) to the storage systems (3);
- storing (14) the transmitted content elements at their specific locations within the placeholder files ; and
- processing (18) the stored content elements with the one or more processing nodes (2).

2. The method according to claim 1, **further** comprising the step of storing (15) information about which content elements of the digital content are available at the storage systems (3) in a management file, a system memory, or other storage.

3. The method according to claim 1 or 2, **further** comprising the step of checking (16) whether all content elements of the digital content necessary for a specific processing task are available at the storage systems (3) before initiating processing (18) of the content elements.

4. The method according to one of the preceding claims, **further** comprising the step of providing results of the processing (18) of the content elements to a further stage of a processing workflow.

5. The method according to one of the preceding claims, **wherein** the internal file management information (7, 8) comprises one or more index tables (7) and/or header information (8).

6. The method according to one of the preceding claims, **wherein** the content elements are frames of a digital image sequence.

7. The method according to one of the preceding claims, **wherein** the container file is one of an MXF file, an AVI file, and a MOV file.

8. An apparatus (30) for processing digital content stored in a data repository (1) using one or more processing nodes (2) with associated storage systems (3), the digital content being arranged in a container file comprising internal file management information (7, 8) in accordance with a container file format, the apparatus (30) **comprising:**
- an input (33) for receiving the internal file management information (7, 8) and content elements of the digital content from the data repository (1); and
- a writer engine (31) for creating (10) placeholder files with the size of the digital content on the storage systems (3), for storing (12) the received internal file management information (7, 8) at locations within the placeholder files specified by the container file format, and for storing (14) the received content elements at their specific locations within the placeholder files.

9. The apparatus (30) according to claim 8, **further** comprising a content tracker (34) for tracking which content elements of the digital content are already available on the storage systems (3) and for storing (15) information in a management file about which content elements of the digital content are already available on the storage systems (3).

10. The apparatus (30) according to claim 8 or 9, **wherein** the internal file management information (7, 8) comprises one or more index tables (7) and/or header information (8).

11. The apparatus (30) according to one of claims 8 to 10,
**wherein** the content elements are frames of a digital image sequence.

12. The apparatus (30) according to one of claims 8 to 11,
**wherein** the container file is one of an MXF file, an AVI file, and a MOV file.
